# EUROPEAN PATENT SPECIFICATION

(11) **EP 3 456 491 B1**
(45) Date of publication and mention of the grant of the patent: **26.05.2021**
(21) Application number: 17736867.7
(22) Date of filing: 25.01.2017
(51) Int. Cl.: B25J 15/06, B65G 47/91, B25J 9/00, B25J 11/00, B25J 15/00

(54) **MANIPULATOR ARM, MANIPULATOR AND BEARING DEVICE**
MANIPULATORARM, MANIPULATOR UND LAGERVORRICHTUNG
BRAS MANIPULATEUR, MANIPULATEUR ET DISPOSITIF DE SUPPORT

(30) Priority: 13.05.2016 CN 201620437984 U
(43) Date of publication of application: 20.03.2019
(73) Proprietor: BOE Technology Group Co., Ltd., Beijing 100015 (CN); Ordos Yuansheng Optoelectronics Co., Ltd., Ordos, Inner Mongolia 017020 (CN)
(72) Inventor: CUI, Fuyi, Beijing 100176 (CN); SUN, Quanqin, Beijing 100176 (CN); WANG, Xiangnan, Beijing 100176 (CN); XIAO, Ang, Beijing 100176 (CN); SHIN, Hyunchel, Beijing 100176 (CN)
(74) Representative: Isarpatent
(86) International application number: PCT/CN2017/072533
(87) International publication number: WO 2017/193643

(56) References cited:
- EP-A1- 0 429 901
- EP-A1- 2 236 252
- CN-A- 103 465 267
- CN-A- 104 179 781
- CN-U- 203 185 351
- CN-U- 205 674 219
- KR-A- 20070 033 798
- KR-B1- 101 385 443
- US-A- 5 149 162
- US-A1- 2009 290 960
- US-A1- 2011 141 448
- US-A1- 2014 008 929
- US-A1- 2014 037 413
- US-B1- 6 739 638

## Description

### TECHNICAL FIELD

The present disclosure relates to the field of manufacturing machinery technology, and in particularly to a manipulator arm, a manipulator and a carrying device.

### BACKGROUND

Currently, in the productive process of Organic Light-Emitting Diodes (OLEDs), a manipulator for picking-and-placing a flexible substrate is provided with a plurality of vacuum suction pads. However, when the vacuum suction pads suck the flexible substrate, local deformation of the flexible substrate may be caused in picking and placing the flexible substrate, since the number of vacuum suction pads is limited and a large vacuum suction force is required. Moreover, since the vacuum suction pads on the manipulator provide suction forces at points, the whole flexible substrate deforms greatly.

US 2009/290960 A1 discloses an apparatus for transferring and securing a substrate. A pressure source is provided that is adapted to provide positive and negative pressure. A vacuum chuck is provided having a top side with a plurality of vacuum chuck portals formed therein. Each vacuum chuck portal is in fluid communication with the pressure source. The substrate is secured to the top side of the vacuum chuck when the pressure source provides negative pressure to the vacuum chuck portals. An intermediate member that selectively cooperates with the vacuum chuck to support and transfer the substrate between the vacuum chuck and the intermediate member is provided. The intermediate member has a plurality of receiving spaces and a plurality of transfer members. The receiving spaces and transfer members are adjacent to one another in an alternating pattern, and each transfer member has a top side with a plurality of transfer member portals formed therein. Each transfer member portal is in fluid communication with the pressure source. A carriage extending along at least a portion of the periphery of the vacuum chuck and along at least a portion of the periphery of the intermediate member is provided. The carriage engages at least a portion of the substrate when the pressure source provides positive pressure to the vacuum chuck portals and transfer member portals to transfer the substrate between the intermediate member and the vacuum chuck.

US 6,739,638 B1 discloses a workpiece carrying apparatus. A workpiece holding portion of the hand for holding a workpiece such as liquid crystal glass is formed by a horizontal holding arm (5) extending in the horizontal direction and consisting of a carbon fiber material, the horizontal holding arm (5) has a horizontal arm portion (7) opposed to the workpiece and at least one bent portion (6) being bent in a direction crossing the horizontal arm portion (7), and a surface of a corner portion (5d) on the border between the bent portion (6) and the horizontal arm portion (7) is rounded.

KR 101385443 B1 discloses a collet for the pick-up transfer of a semiconductor chip. A plate can be gripped on the outside of a collet holder, thereby facilitating the separation and exchange of an absorption rubber, and a stable absorptive power is assigned on the entire surface of a semiconductor chip which is adsorbed to the absorption rubber. A contact surface void between the semiconductor chip and a lead frame can be prevented, in order to enhance the absorptive power and, in addition, the generation of static electricity during the absorption and separation process of the semiconductor chip is prevented. Thereby, the defect rate of the semiconductor chip during the absorption process can be minimized.

US 2014/037413 A1 discloses a suction chuck and a workpiece transfer apparatus including the same. The suction chuck for sucking a workpiece of thin flat-plate shape and holding the workpiece in a non-contact state, the suction chuck comprising: a main body having a flat plate shape, in which a passage for a compressed gas is formed; and an opposing surface that is a surface of the main body at the a side facing the workpiece, the opposing surface having a plurality of recesses formed therein, the plurality of recesses serving as a sucking element for generating a negative pressure by ejecting the compressed gas, the opposing surface being formed with a shape similar to the a shape of the workpiece or with a shape that corresponds to the shape of the workpiece being offset outward, such that the shape of the opposing surface is able to completely cover the shape of the workpiece when seen along a direction perpendicular to the opposing surface, the recesses being arranged such that all of the recesses are coverable by the shape of the workpiece when seen along the direction perpendicular to the opposing surface.

US 5 149 162 A discloses a suction head comprising a suction plate stacked on the suction head, the head and the plate comprising corresponding suction holes uniformly distributed in a matrix, the suction head further comprising a vacuum cavity connected to the plurality of suction holes.

### SUMMARY

An object of the present disclosure is to provide a manipulator arm, a manipulator and a carrying device to pick and place a flexible substrate better during manufacturing of the flexible substrate, thus reducing deformation and increasing the product yield.

The invention is defined by the features of independent claim 1. Preferred embodiments are defined by the dependent claims.

Technical solutions provided by the present disclosure are as follows.

The present disclosure provides a manipulator arm, which includes at least one arm body for carrying a to-be-carried object, wherein each of the at least one arm body is provided with a suction plate for sucking the to-be-carried object, and the suction plate is provided with a plurality of vacuum suction holes.

Furthermore, the suction plate is an anti-static plate made of an anti-static material. Furthermore, a width of the suction plate on the arm body is identical to a width of the arm body.

Furthermore, a diameter of the vacuum suction hole is in the range of 0.1mm∼0.5mm. Furthermore, a distance between two adjacent vacuum suction holes is in the range of 5mm∼10mm.

Furthermore, the plurality of vacuum suction holes is uniformly distributed in a matrix on the suction plate.

Furthermore, the arm body is a carbon fiber arm body made of a carbon fiber material.

Furthermore, the arm body further includes a vacuum cavity connected to the plurality of vacuum suction holes.

The present disclosure provides a manipulator, including the above-mentioned manipulator arm.

The present disclosure provides a carrying device, including the above-mentioned manipulator.

The present disclosure has the following beneficial effects.

According to the above solutions, the manipulator arm is provided with a flat suction plat to suck a to-be-carried object. When picking and placing a to-be-carried object, for example, a flexible substrate, since there are many vacuum suction holes on the suction plate, a relatively small vacuum pressure may be used to suck the flexible substrate such that the local deformation of the flexible substrate becomes small. In addition, since the flexible substrate is supported by the suction plate, the overall deformation of the flexible substrate also becomes small in comparison with the related art, thus reducing defects caused by the deformation and increasing the product yield of flexible substrates.

### BRIEF DESCRIPTION OF THE DRAWINGS

Fig. 1 is a side view showing a manipulator arm carrying a substrate provided by some embodiments of the present disclosure;
Fig. 2 is a front view showing a structure of a manipulator provided by some embodiments of the present disclosure;
Fig. 3 is a front view showing a manipulator carrying a substrate provided by some embodiments of the present disclosure;
Fig. 4 is a schematic section view along line A-A' in Fig. 2 of the manipulator arm provided by some embodiments of the present disclosure;
Fig. 5 is a schematic view showing a carrying device provided by some embodiments of the present disclosure.

### DETAILED DESCRIPTION

In order to make the objects, the technical solutions and the advantages of the embodiments of present disclosure more clear, the embodiments of the present disclosure will be described hereinafter in a clear and complete manner in conjunction with the drawings of the embodiments of the present disclosure. Certainly, the following embodiments are merely a part of, rather than all of, the embodiments of the present disclosure, and based on these embodiments of the present disclosure, a person skilled in the art may obtain other embodiments, which also fall within the protection scope of the present disclosure.

In order to solve the technical problem in the related art that the flexible substrate deforms when the manipulator picks and places the flexible substrate, the present disclosure provides a manipulator arm capable of picking-and-placing the flexible substrate better during manufacturing of the flexible substrate to reduce deformation and increase the product yield.

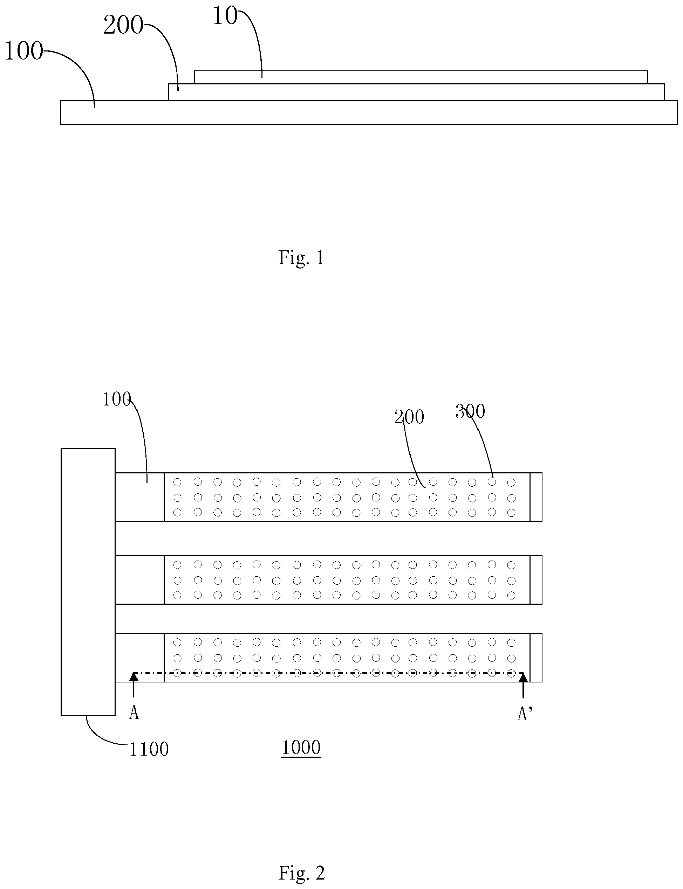

As shown in Fig. 1 to Fig. 3, a manipulator arm provided by the present disclosure includes at least one arm body 100 for carrying a to-be-carried object, wherein the arm body 100 is provided with a suction plate 200 for sucking the to-be-carried object, and the suction plate 200 is provided with a plurality of vacuum suction holes 300.

In above solutions, the manipulator arm is provided with the flat suction plate 200 to suck the to-be-carried object, and the to-be-carried object may be a substrate for display, a panel film material, etc. When using the manipulator arm provided by the present disclosure to pick and place a to-be-carried object, for example, a flexible substrate 10, since there are many vacuum suction holes 300 on the suction plate 200, a relatively small vacuum pressure may be used to suck the flexible substrate 10 such that the local deformation of the flexible substrate 10 will become small. In addition, since the flexible substrate 10 is supported by the suction plate 200, an overall deformation of the flexible substrate 10 will also become small in comparison with the related arts, thus reducing damages of a thin film transistor (TFT) caused by the deformation or defects generated by the cracking of a thin film encapsulation (TFE) film layer and increasing the product yield of the flexible substrate 10.

According to a manipulator arm provided by the present disclosure in some embodiments, optionally, the suction plate 200 is an anti-static plate made of an anti-static material, and the arm body 100 is a carbon fiber arm body 100 made of a carbon fiber material.

According to the above solutions, the suction plate 200 is made of an anti-static material, which provides an anti-static effect.

In addition, according to a manipulator arm provided by the present disclosure in some embodiments, optionally, a width of the suction plate 200 on the arm body 100 is identical to a width of the arm body 100.

According to the above solutions, the width of the suction plate 200 may be designed to be identical to the width of the corresponding arm body 100 to increase a contact area between the suction plate 200 and the flexible substrate 10.

It should be understood that, in practical applications, a size of the suction plate 200 may also be adjusted according to practical requirements.

In addition, according to a manipulator arm provided by the present disclosure in some embodiments, optionally, an aperture of the vacuum suction hole 300 is in the range of 0.1mm∼0.5mm. With the above solutions, since the size of the vacuum suction hole 300 is small, the deformation of the substrate 10 may further be reduced. Certainly, it should be understood that, the above-provided structure is merely an optional structure of the vacuum suction hole 300, and the specific size of the vacuum suction hole 300 in practical applications is not limited herein.

In addition, according to a manipulator arm provided by the present disclosure in some embodiments, optionally, a distance between two adjacent vacuum suction holes 300 distributed on the suction plate 200 is in the range of 5mm∼10mm. In the above solutions, the number of the openings on the suction plate 200 is determined according to a distance between openings which is in the range of 5m∼10mm, and an opening size is in the range of 0.1mm∼0.5mm. Certainly, it should be understood that, the above-provided structure is merely an optional structure of the vacuum suction hole 300, and the specific distance between the vacuum suction holes 300 in practical applications is not limited herein.

In addition, according to a manipulator arm provided by the present disclosure in some embodiments, optionally, as shown in Fig. 2, the plurality of vacuum suction holes 300 is distributed in a matrix on the suction plate 200. According to the above solutions, since the vacuum suction holes 300 on the suction plate 200 are uniformly distributed in a matrix, when picking and placing the flexible substrate 10, a relatively uniform suction force is applied to the flexible substrate 10. It should be understood that, the specific distribution of the vacuum suction holes 300 in practical applications is not limited herein.

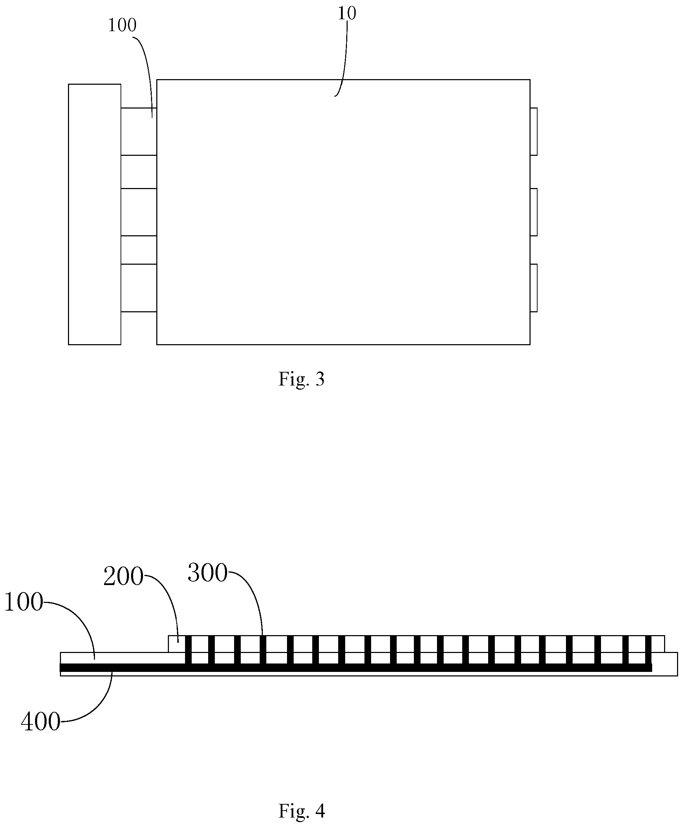

In addition, according to a manipulator arm provided by the present disclosure in some embodiments, as shown in Fig. 4, the arm body 100 further includes a vacuum cavity 400 connected to the plurality of vacuum suction holes 300. By arranging a vacuum cavity 400 on the arm body 100 for vacuumizing, which is in communication with the plurality vacuum suction holes 300 using this vacuum cavity 400 to make the vacuum suction holes 300 suck and fix the substrate 10.

In addition, the present disclosure further provides in some embodiments a manipulator, including the above-mentioned manipulator arm. Fig. 2 shows a manipulator 1000 provided by the present disclosure in some embodiments, including a body 1100 and the above-mentioned manipulator arm. As shown in Fig. 2, the manipulator arm is arranged on the body 1100.

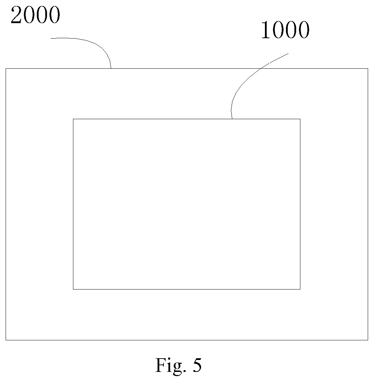

In addition, the present disclosure further provides in some embodiments a carrying device including the above-mentioned manipulator. Fig. 5 shows a carrying device 2000 provided by the present disclosure in some embodiments, including the manipulator 1000.

The above are merely the optional embodiments of the present disclosure. It should be noted that, a person skilled in the art may make improvements and replacements without departing from the technical principle of the present disclosure, and these improvements and replacements shall also fall within the protection scope of the present disclosure, as defined by the appended claims.

## Claims

1. A manipulator arm, comprising at least one arm body (100) for carrying a to-be-carried object, wherein the arm body (100) is provided with a suction plate (200) for sucking the to-be-carried object, the arm body (100) is of a plate shape, the suction plate (200) is of a plate shape, and the arm body (100) and the suction plate (200) are stacked together; a width of the suction plate (200) on the arm body (100) is identical to a width of the arm body (100); the suction plate (200) is provided with a plurality of vacuum suction holes (300), the plurality of vacuum suction holes (300) is uniformly distributed in a matrix on the suction plate (200), the arm body (100) is provided with a plurality of holes in one-to-one correspondence with the plurality of vacuum suction holes (300) of the suction plate (200); the arm body (100) further comprises a vacuum cavity (400) connected to the plurality of vacuum suction holes (300); a diameter of the vacuum suction hole (300) is in the range of 0.1mm∼0.5mm, a distance between two adjacent vacuum suction holes (300) is in the range of 5mm∼10mm; the arm body (100) is a carbon fiber arm body (100) made of a carbon fiber material, and the suction plate (200) is an anti-static plate made of an anti-static material.

2. A manipulator (1000), comprising the manipulator arm according to claim 1.

3. The manipulator according to claim 2, wherein the manipulator arm is arranged on a body (1100).

4. A carrying device (2000), comprising the manipulator (1000) according to claim 2.

## Patentansprüche

1. Manipulatorarm, umfassend mindestens einen Armkörper (100) zum Tragen eines zu tragenden Gegenstands, wobei der Armkörper (100) mit einer Saugplatte (200) zum Ansaugen des zu tragenden Gegenstands versehen ist, der Armkörper (100) von plattenartiger Gestalt ist, die Saugplatte (200) von plattenartiger Gestalt ist und der Armkörper (100) und die Saugplatte (200) übereinander angeordnet sind; die Breite der Saugplatte (200) auf dem Armkörper (100) mit der Breite des Armkörpers (100) übereinstimmt; die Saugplatte (200) mit einer Mehrzahl an Vakuumsauglöchern (300) versehen ist, die Mehrzahl an Vakuumsauglöchern (300) gleichförmig in einer Matrix auf der Saugplatte (200) verteilt ist, der Armkörper (100) mit einer Mehrzahl an Löchern versehen ist, die jeweils eins-zueins der Mehrzahl an Vakuumsauglöchern (300) der Saugplatte (200) entsprechen; der Armkörper (100) weiterhin eine Vakuumkammer (400) umfasst, die mit der Mehrzahl an Vakuumsauglöchern (300) in Verbindung steht; der Durchmesser des Vakuumsauglochs (300) im Bereich von etwa 0,1 mm bis 0,5 mm liegt, die Entfernung zwischen zwei benachbarten Vakuumsauglöchern (300) im Bereich von etwa 5 mm bis 10 mm liegt; es sich bei dem Armkörper (100) um einen Kohlefaserarmkörper (100) handelt, der aus einem Kohlefasermaterial hergestellt ist, und es sich bei der Saugplatte (200) um eine antistatische Platte handelt, die aus einem antistatischen Material hergestellt ist.

2. Manipulator (1000), umfassend den Manipulatorarm nach Anspruch 1.

3. Manipulatorarm nach Anspruch 2, wobei der Manipulatorarm an einem Körper (1100) angeordnet ist.

4. Trägervorrichtung (2000), umfassend den Manipulator (1000) nach Anspruch 2.

## Revendications

1. Bras manipulateur, comprenant au moins un corps de bras (100) pour porter un objet à porter, dans lequel le corps de bras (100) est pourvu d'une plaque d'aspiration (200) pour aspirer l'objet à porter, le corps de bras (100) est en forme de plaque, la plaque d'aspiration (200) est en forme de plaque et le corps de bras (100) et la plaque d'aspiration (200) sont empilés l'un sur l'autre ; une largeur de la plaque d'aspiration (200) sur le corps de bras (100) est identique à une largeur du corps de bras (100) ; la plaque d'aspiration (200) est pourvue d'une pluralité de trous d'aspiration à vide (300), la pluralité de trous d'aspiration à vide (300) est distribuée uniformément en une matrice sur la plaque d'aspiration (200), le corps de bras (100) est pourvu d'une pluralité de trous en correspondance un à un avec la pluralité de trous d'aspiration à vide (300) de la plaque d'aspiration (200) ; le corps de bras (100) comprend en outre une cavité à vide (400) reliée à la pluralité de trous d'aspiration à vide (300) ; un diamètre du trou d'aspiration à vide (300) se situe dans la plage de 0,1 mm à 0,5 mm, une distance entre deux trous d'aspiration à vide adjacents (300) se situe dans la plage de 5 mm à 10 mm ; le corps de bras (100) est un corps de bras en fibres de carbone (100) constitué d'un matériau en fibres de carbone et la plaque d'aspiration (200) est une plaque antistatique constituée d'un matériau antistatique.

2. Manipulateur (1000), comprenant le bras manipulateur selon la revendication 1.

3. Manipulateur selon la revendication 2, dans lequel le bras manipulateur est disposé sur un corps (1100).

4. Dispositif porteur (2000), comprenant le manipulateur (1000) selon la revendication 2.
